# EUROPEAN PATENT SPECIFICATION

(11) **EP 1 367 585 B1**
(45) Date of publication and mention of the grant of the patent: **22.03.2006**
(21) Application number: 02716426.8
(22) Date of filing: 28.01.2002
(51) Int. Cl.: G11B 7/085, G11B 21/02

(54) **DISK DEVICE**
PLATTENEINRICHTUNG
DISPOSITIF A DISQUE

(30) Priority: 31.01.2001 JP 2001023060
(43) Date of publication of application: 03.12.2003
(73) Proprietor: SANYO ELECTRIC CO., LTD., Moriguchi-shi, Osaka 570-8677 (JP)
(72) Inventor: NAKASHIMA, Hiroshi, Hirakata-shi, Osaka 573-0163 (JP); KAMIMURA, Takaya, Nara, Nara 631-0062 (JP)
(74) Representative: Glawe, Delfs, Moll
(86) International application number: PCT/JP2002/000616
(87) International publication number: WO 2002/061748

(56) References cited:
- EP-A- 0 978 825
- JP-A- 11 224 482
- JP-A- 2001 023 320
- US-A- 5 982 735
- PATENT ABSTRACTS OF JAPAN vol. 1999, no. 13, 30 November 1999 (1999-11-30) & JP 11 224482 A (MATSUSHITA ELECTRIC IND CO LTD), 17 August 1999 (1999-08-17)
- PATENT ABSTRACTS OF JAPAN vol. 2000, no. 16, 8 May 2001 (2001-05-08) & JP 2001 023320 A (SANYO ELECTRIC CO LTD), 26 January 2001 (2001-01-26)

## Description

### TECHNICAL FIELD

The present invention relates to disk recording or playback devices having a tilt adjusting mechanism for tilting a pickup relative to the signal bearing surface of a disk.

### BACKGROUND ART

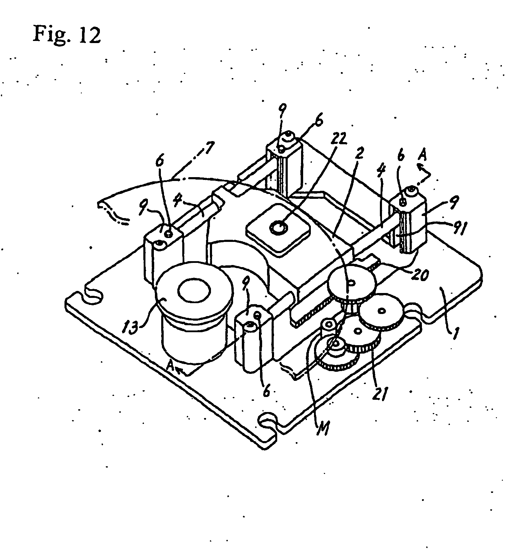

FIG. 12 is a perspective view of a conventional disk recording or playback device. A chassis 1 is provided thereon with a turntable 13 for placing a disk 7 thereon as is well known, and a pickup 2 movable toward or away from the turntable 13. The pickup 2 has an objective 22 on its upper surface and is movable as guided by two guide rods 4, 4 on the chassis 1. Each guide rod 4 has opposite ends fitting in respective brackets 9, 9 on the chassis 1.

A motor M mounted on the chassis 1 at a side portion thereof is coupled by a gear mechanism 21 to a rack 20 provided on a side portion of the pickup 2. When energized, the motor M rotates gears of the gear mechanism 21 to move the pickup 2.

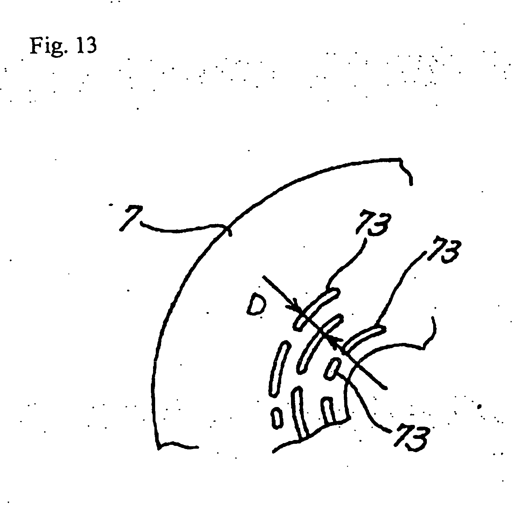

FIG. 13 is a rear view of the disk 7. Pits 73, 73 are formed in the signal bearing surface of the disk 7 circumferentially thereof. The intensity of light reflected from the disk differs when the laser beam is projected on the pit 73 and when the laser beam is projected on a portion other than the pit 73. This reproduces a digital signal comprising 0 and 1.

Available in recent years are disks 7 adapted to record signals thereon at a high density. These disks are smaller in the spacing D between pits 73, 73 in the radial direction of the disk shown in FIG. 13.

Accordingly, if the optical axis of the laser beam slightly inclines relative to the signal bearing surface of the disk 7, it is likely that the signal can not be reproduced correctly since a pit 73 in a wrong position is irradiated with the beam.

It is therefore proposed to provide a mechanism on the chassis 1 for adjusting the tilt of the pickup 2 and to finely adjust the tilt of the pickup 2 during the process for fabricating the disk recording or playback device for smooth reproduction of signals which are recorded on disks at a high density.

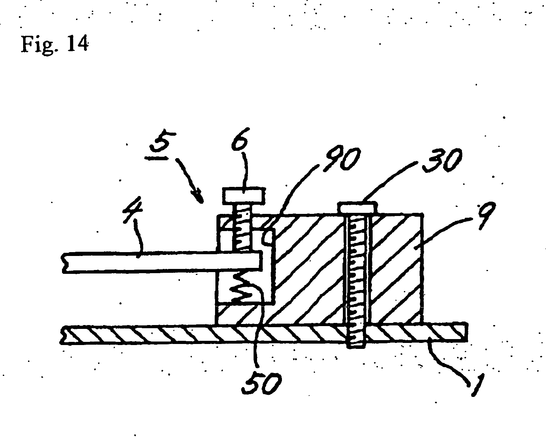

FIG. 14 is a side elevation in section of an adjusting mechanism 5. The chassis 1 has provided thereon a bracket 9 having a recess 90 for one end of a guide rod 4 to fit in. The bracket 9 is fastened to the chassis 1 with a screw 30 driven into the chassis 1.

A compression spring 50 for biasing the guide rod 4 upward is provided in the recess 90. An adjusting screw 6 is driven into the bracket 9 for depressing the guide rod 4 against the compression spring 50. When the adjusting screw 6 is turned, the end of the guide rod 4 is moved upward or downward, so that the guide rod 4 tilts within a plane containing the direction of movement of the pickup 2 and orthogonal to the chassis 1. The tilt of the pickup 2 can be finely adjusted in this way.

The prior art involves the likelihood that the bracket will deviate to move in a plane parallel to the chassis 1, i.e., in a horizontal plane, when the bracket 9 is fastened to the chassis 1 with the screw 30. Even if the tilt of the pickup 2 is accurately adjustable, the likelihood of the guide rod 4 deviating to move within a horizontal plane then makes it impossible for the pickup 2 to accurately move toward the center of the disk.

Furthermore, there is a slight clearance between a side wall defining the recess 90 and the guide rod 4 fitted in the recess 90. The guide rod 4 is therefore likely to deviate or move within the clearance unless the adjusting screw 6 depresses the guide rod 4 accurately.

In JP-A-11224482 a disc recording device according to the preamble of claim 1 and claim 2 is disclosed. It comprises an adjusting mechanism in which a larger margin can be secured for environmental variations.

In US-A-5,982,735 an adjustment mechanism for use in a recording/reproducing device is disclosed. The adjustment mechanism comprises a base, a pick-up head, a first guiding rod and a second guiding rod, guiding a movement of the pick-up head, being parallel to the each other and forming a plane with an orientation with respect to the disc that determines the angle of incidence of a laser beam, and at least three supports, each holding one end of the first and second guiding rods. Each of the supports comprises a main body, a spring and an adjusting screw. By adjusting the supports the orientation of the plane is adjusted.

In EP-A-0 978 825 a disc player is disclosed. The disc player comprises an optical pickup, two guide shafts being disposed on opposite sides of the optical pickup for guiding the movement of the optical pickup, an adjustment system for adjusting the position of each guide shaft.

In JP 2001 023320 A a disc recording/reproducing device is disclosed. It comprises guide shafts for guiding a pickup and a screw shaft for adjusting the orientation.

An object of the present invention is to accurately position a mechanism for adjusting the tilt of a pickup on a chassis, to prevent a guide rod from inadvertently deviating to move within a plane substantially parallel to the chassis and to give the device of the type described increased resistance to impact due, for example, to falling.

### DISCLOSURE OF THE INVENTION

These and other objects of the present invention are achieved by a disc recording or playback device according to independent claims 1 and 2. The dependent claim treats further advantageous developments of the present invention.

### BRIEF DESCRIPTION OF THE DRAWINGS

FIG. 1 is a plan view of a disk recording or playback device.
FIG. 2 is a sectional side elevation of FIG. 1 showing a bracket of first embodiment.
FIG. 3 is a sectional side elevation of FIG. 1 showing a bracket of second embodiment.
FIG. 4 is an exploded perspective view of the bracket, guide rod and bearing plate according to the first embodiment.
FIG. 5 is a sectional view showing the bracket of the first embodiment as adjusted.
FIG. 6 is a sectional view showing the bracket of the first embodiment as subjected to an impact.
FIG. 7 is an exploded perspective view of the bracket, guide rod and bearing plate according to the second embodiment.
FIG. 8 is a sectional view showing the bracket of the second embodiment as adjusted.
FIG. 9 is a sectional view showing the bracket of the second embodiment as subjected to an impact.
FIG. 10 is a rear view of a chassis.
FIG. 11 is a plan view of the bearing plate.
FIG. 12 is a perspective view of a conventional disk recording or playback device.
FIG. 13 is a rear view of a disk.
FIG. 14 is a side elevation in section of an adjusting mechanism.

### BEST MODE OF CARRYING OUT THE INVENTION

With reference to the drawings, embodiments of the invention will be described below in detail.

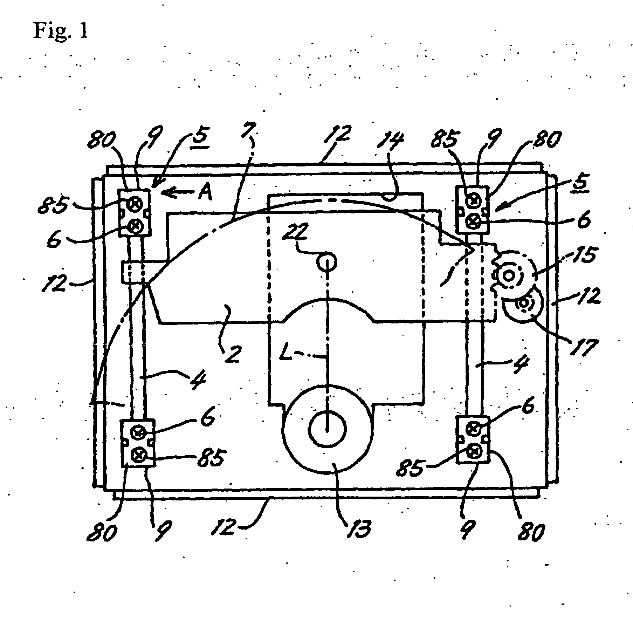

FIG. 1 is a plan view of a disk recording or playback device.

As in the prior art, a turntable 13 for rotating a disk 7 is provided at a side portion of an opening 14 formed in a chassis 1, and a pickup 2 comprising an objective 22 for projecting a beam on the disk 7 is so disposed as to be movable toward or away from the turntable 13.

The pickup 2 is fittingly mounted on guide rods 4, 4 each supported at opposite ends thereof by respective brackets 9, 9, and is designed to move on a phantom line L connecting the respective centers of the lens 22 and the turntable 13.

A motor 17 is mounted on the chassis 1 laterally of the opening 14 and coupled to the pickup 2 by an intermediate gear 15. When energized, the motor 17 moves the pickup 2.

The chassis 1 has outer peripheral edges, which are bent upward to provide upright walls 12, 12 fastened to a cabinet (not shown) disposed externally of the chassis 1.

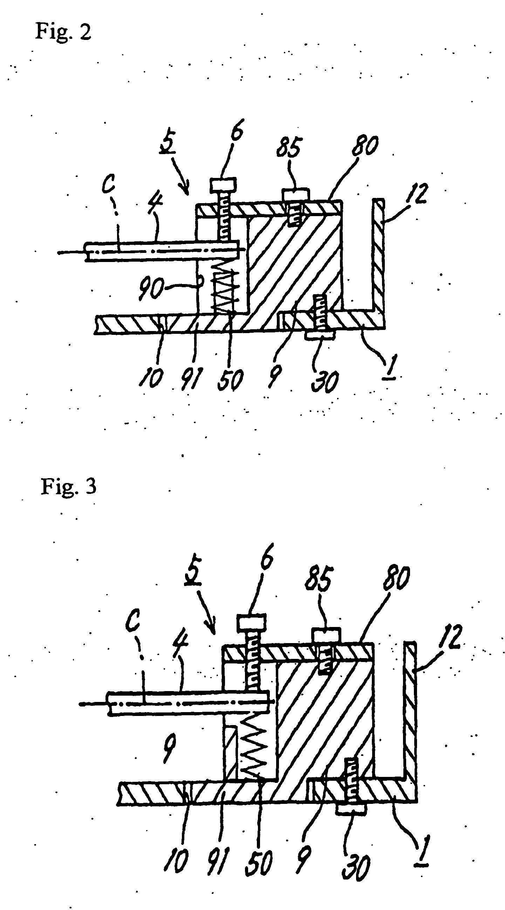

FIGS. 2 and 3 are side elevations in section showing brackets 9 as seen from the direction A in FIG. 1. FIG. 2 shows the bracket of a first embodiment of the invention to be described later, and FIG. 3 shows the bracket of a second embodiment. The bracket 9 is fastened to the chassis 1 with a screw 30 driven into the bracket from below the chassis 1. The bracket 9 has a recess 90 for the end of the guide rod 4 to fit in, and a compression spring 50 for biasing the guide rod 4 upward is disposed in the recess 90.

The top of the bracket 9 is covered with a bearing plate 80, which is fastened to the bracket 9 with a screw 85. An adjusting screw 6 is in screw-thread engagement with the bearing plate 80 and has a lower end in contact with the top of the guide rod 4. The arrangement is so designed that the direction of advance of the adjusting screw 6 is pointed toward the center C of the guide rod 4.

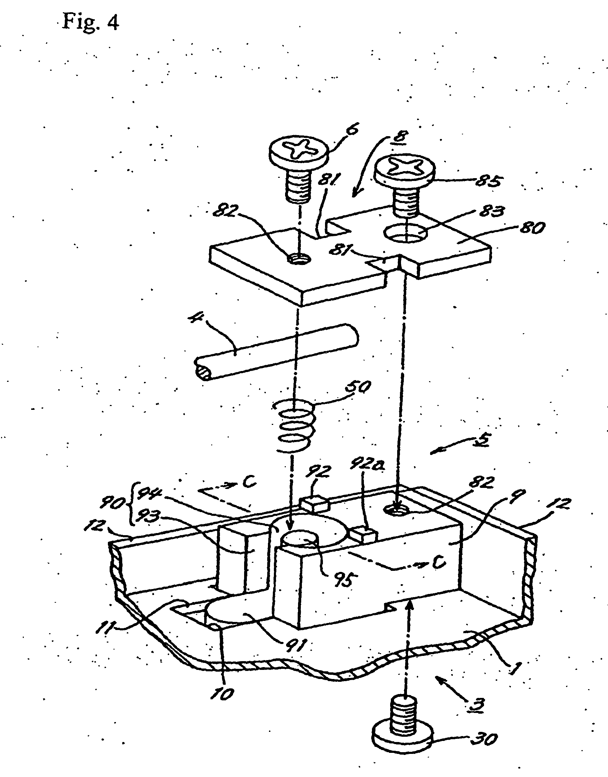

FIG. 4 is an exploded perspective view of the bracket 9, guide rod 4 and bearing plate 80 according to the first embodiment of the invention, with the chassis 1 shown as partly broken away.

The chassis 1 has an aperture 10 for the bracket 9 to partly fit in. Extending from the bracket 9 is a tongue 91 fitting in the aperture 10. The tongue 91 has an upper surface flush with the upper surface of the chassis 1. Thus, the tongue 91 is positioned below the guide rod 4. The tongue 91 has a circular-arc form and is in contact with an edge 11 of the chassis defining the aperture 10, whereby the bracket 9 is positioned in place in the plane of the chassis 1 with respect to horizontal directions.

The recess 90 has a guide portion 93 with a width permitting the guide rod 4 to slightly loosely fit into the portion 93, and an accommodating portion 94 extending from the guide portion 93 in the form of a protuberant space and having the compression spring 50 fitted therein.

Formed on the bottom surface of the recess 90 is a boss 95 having a diameter slightly smaller than the inside diameter of the compression spring 50.

The boss 95 has a height not permitting the pickup 2 to contact the chassis 1 when the guide rod 4 is brought into contact with the boss 95.

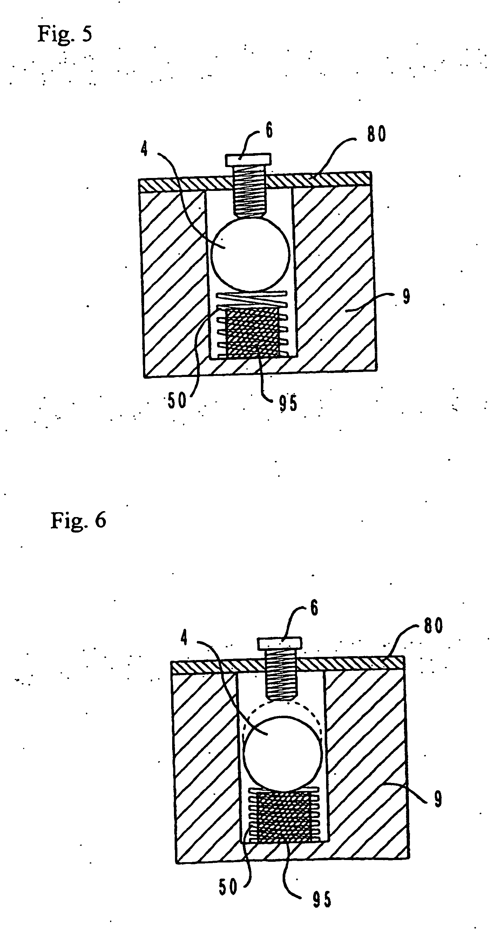

This limits the movable range of the guide rod 4 as shown in FIGS. 5 and 6. making it possible to prevent the collision of the pickup 2 with the chassis 1 even when the device is subjected to an impact in the event of falling.

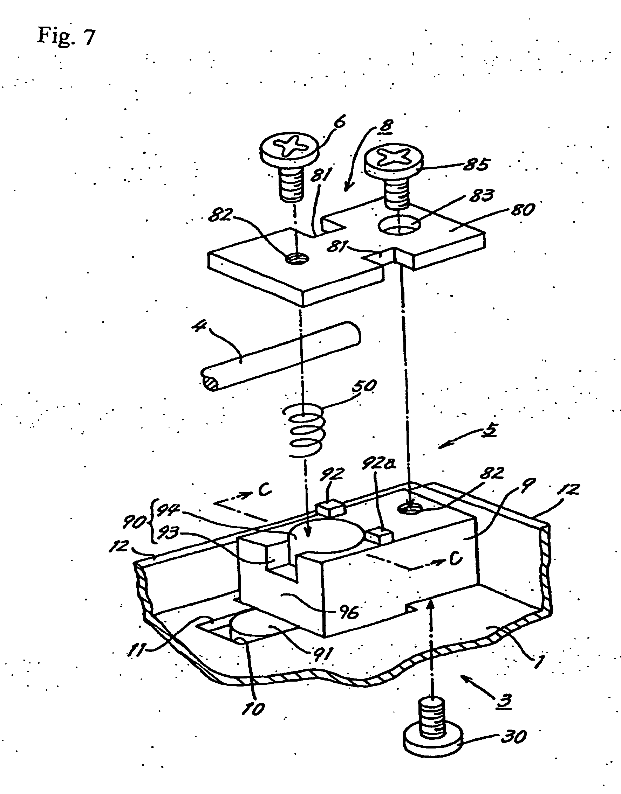

FIG. 7 is an exploded perspective view of the bracket 9, guide rod 4 and bearing plate 80 according to the second embodiment of the invention, with a chassis 1 shown as partly broken away.

As is the case with the first embodiment, the chassis 1 has an aperture 10 for the bracket 9 to partly fit in. Extending from the bracket 9 is a tongue 91 fitting in the aperture 10. The tongue 91 has an upper surface flush with the upper surface of the chassis 1. Thus, the tongue 91 is positioned below the guide rod 4. The tongue 91 has a circular-arc form and is in contact with an edge 11 of the chassis defining the aperture 10, whereby the bracket 9 is positioned in place with respect to horizontal directions in the plane of the chassis 1.

A recess 90 has a guide portion 93 with a width permitting the guide rod 4 to slightly loosely fit into the portion 93, and an accommodating portion 94 extending from the guide portion 93 in the form of a protuberant space and having a compression spring 50 fitted therein.

The guide portion 93 of the bracket 9 is provided with a wall 96 having a cutout for the guide rod 4 to fit in.

The wall 96 has a height not permitting the contact of the pickup 2 with the chassis 1 when the guide rod 4 is brought into contact with the wall.

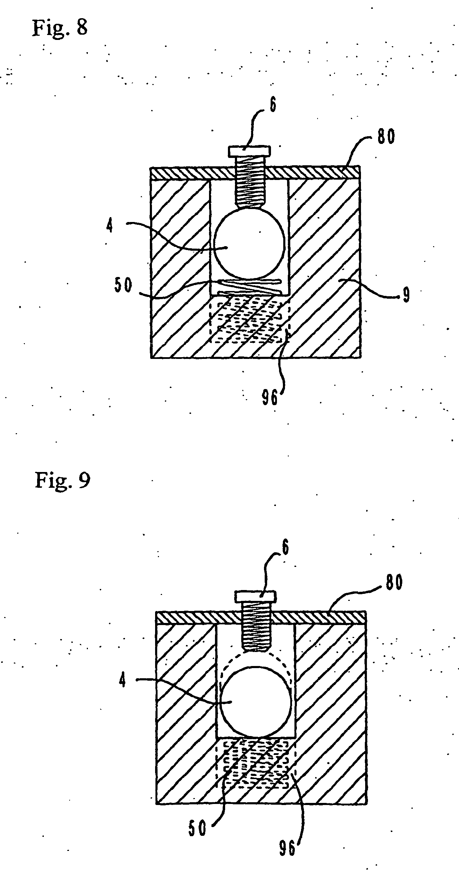

This limits the movable range of the guide rod 4 as shown in FIGS. 8 and 9, making it possible to prevent the collision of the pickup 2 with the chassis 1 even when the device is subjected to an impact in the event of falling.

The top wall of the bracket 9 has positioning projections 92, 92a fittable into the bearing plate 80, and a screw bore 82 positioned at one side of the arrangement of projections 92, 92a for driving a plate fastening screw 85 thereinto.

The bearing plate 80 is provided with cutouts 81, 81 for the respective positioning projections 92, 92a to fit in. Formed in the bearing plate 80 at opposite sides of the cutouts 81, 81 are a screw hole 82 for the adjusting screw 6 to be driven in, and a hole 83 for the plate fastening screw 85 to be inserted through.

### [Attaching Brackets]

### (First Positioning Means]

The bracket 9 is attached to the chassis 1 by the following procedure.

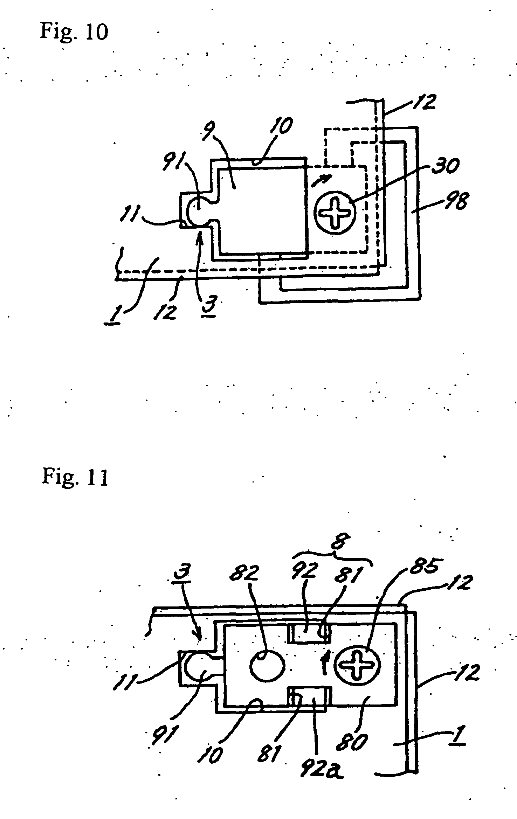

FIG. 10 is a rear view of the chassis 1. First, the chassis 1 is turned upside down, and the bracket 9 is inserted into the aperture 10 from below the chassis 1. With the tongue 91 fitted in the aperture 10 , the bracket 9 is fixed to a jig 98 to restrain the bracket 9 from turning in a horizontal plane.

The fastening screw 30 is driven into the bracket 9 through the chassis 1. The screw 30 turns clockwise by tightening up, so that when the head of the screw 30 comes into contact with the chassis 1, the chassis 1 turns clockwise due to the friction between the chassis and the head of the screw 30. The aperture-defining edge 11 comes into contact with the tongue 91, whereby the bracket 9 is positioned in place on the chassis 1. Since the tongue 91 has a circular-arc form, the tongue 91 invariably comes into contact with one point on the edge 11 for positioning. Thus, the tongue 91 of the bracket 9 and the edge 11 provide the first positioning means 3. The bracket 9 is positioned in place on the chassis 1 simultaneously when the bracket 9 is fastened with the screw 30. This saves time and labor in positioning.

### (Second Positioning Means)

Next, the chassis 1 is turned downside up, the bearing plate 80 is placed over the bracket 9 having the compression spring 50 and guide rod 4 inserted therein, and the plate fastening screw 85 is driven through the hole 83 into the screw bore 82 in the bracket 9. The screw 85 is turned clockwise by tightening up, and when the head of the screw 85 comes into contact with the bearing plate 80, the plate 80 turns clockwise due to the friction between the plate and the head of the screw 85.

With reference to FIG. 11 which is a plan view of the bearing plate 80, the cutout portion 81 on the clockwise side comes into contact with the positioning projection 92, whereby the plate 80 is positioned in place in a plane parallel to the plane of the chassis 1. Thus, the positioning projection 92 and the cutout 81 in the bearing plate 80 provide the second positioning means 8. The bearing plate 80 is positioned in place within a plane substantially parallel to the chassis 1 simultaneously when the plate 80 is fastened with the screw 85. This saves time and labor in positioning the plate.

When the adjusting screw 6 is turned after the bracket 9 has been attached, the guide rod 4 has its tilt adjusted in a plane containing the direction of movement of the pickup 2 and orthogonal to the chassis 1.

FIG. 5 is a view in section taken along a plane containing the line C-C in FIG. 4. The direction of advance of the adjusting screw 6 is pointed toward the center C of the guide rod 4 by positioning the bearing plate 80 in place within a plane parallel to the plane of the chassis 1.

Unless the bearing plate 80 is accurately positioned within a plane parallel to the plane of the chassis 1, the direction of advance of the adjusting screw 6 swerves from the center C of the guide rod 4. As previously stated, there is a small clearance in the guide portion 93 of the recess 90 around the guide rod 4, whereas if the direction of advance of the adjusting screw 6 deviates from the center C of the guide rod 4, the adjusting screw 6 pushes the rod 4 at an eccentric portion, permitting the guide rod 4 to laterally deviate in a direction orthogonal to the rod 4 within the range of the clearance.

Since the pickup 2 moves along the guide rod 4, the path of movement of the pickup 2 then deflects from a phantom line L extending toward the center of the disk as shown in FIG. 1. Accordingly, accurately pointing the direction of advance of the adjusting screw 6 toward the center C of the guide rod 4 restrains the rod 4 from laterally deviating toward a direction orthogonal to the rod 4 within the guide portion 93.

Because the range in which the guide rod is movable in the direction of height is limited by the boss 95 or the wall 96, the guide rod 4 is prevented from inadvertently deviating and moving within a plane substantially parallel to the chassis 1 and precluded from shifting or deforming due to an impact, for example, of falling of the device.

The boss 95 and the wall 96 have a height lower than the desired tilt adjusting range and not permitting the pickup 2 to contact the chassis 1 when the guide rod 4 is brought into intimate contact with the boss or the wall. The desired tilt adjusting range is such a range that makes it possible to absorb, for example, the error involved in mounting the pickup 2 and the distortion of the chassis 1, and to mount the pickup 2 in place with predetermined accuracy relative to the disk surface

Consequently, the guide rod 4 is held between the adjusting screw 6 and the compression spring 50 by being pushed up by the force of the spring at all times during tilt adjustment, and is highly responsive to the tightening or loosening turn of the adjusting screw 6 to ensure accurate tilt adjustment.

After the adjustment of tilt, the adjusting screw 6 is locked with an adhesive and thereby prevented from loosening through spontaneous turning. By virtue of the pushing-up force of the compression spring 50, the guide rod 4 remains at an unaltered level to accurately maintain the adjusted tilt angle even if subjected to some vibration or like disturbance from outside, obviating the likelihood that the tilt angle of the pickup will vary.

Further if the device is subjected to an impact due, for example, to falling, the following situation will be encountered.

For example if the user allowed the device to fall off the desk down onto the floor in an error, the device is subjected to acceleration of as great as 100 G, possible causing the pickup 2 to collide with the chassis 1 depending on the direction of fall.

The pickup 2 is a precision optical system comprising an assembly of many small parts, is therefore susceptible to impact and becomes no longer operable for normal recording or playback if the optical system is distorted by colliding with the chassis 1 with 100 G.

In the event of the present device falling, the guide rod 4 comes to a halt at the level of the boss 95 or wall 96.

When the guide rod 4 moves from the adjusted position to this level due to impact, the repulsive force of the compression spring 50 attenuates the acceleration, and the deflection of the guide rod 4 absorbs the impact.

Thus, a great reduction in acceleration mitigates the impact unlike the case wherein the pickup 2 collides directly with the chassis 1.

In this way, the pickup can be protected from impact.

### INDUSTRIAL APPLICABILITY

The bracket 9 can be mounted as accurately positioned on the chassis 1 by the first positioning means 3. This eliminates the likelihood that the guide rod 4 will deviate or move in a plane parallel to the chassis 1.

Furthermore, the direction of advance of the adjusting screw 6 is pointed toward the center C of the guide rod 4 by the second positioning means 8. The height of the compression spring 50 as fully compressed is lower than the tilt adjusting range, and when the guide rod 43 is positioned on the spring 50 of compressed height, the pickup 2 is held out of contact with the chassis 1. Accordingly, the guide rod 4 is held between the adjusting screw 6 and the compression spring 50 by being pushed up by the force of the spring at all times during tilt adjustment, and is highly responsive to the tightening or loosening turn of the adjusting screw 6 to ensure accurate tilt adjustment.

In the event of the device falling, the guide rod 4 comes to a halt at the level of the boss 95 or wall 96, so that when the guide rod 4 moves from the adjusted position to this level due to impact, the repulsive force of the compression spring 50 attenuates the acceleration, and the deflection of the guide rod 4 absorbs the impact to greatly reduce the acceleration and mitigate the impact unlike the case wherein the pickup 2 collides directly with the chassis 1.

The boss 95 and the wall 96 are given a height not permitting the pickup 2 to contact the chassis 1 when the guide rod 4 is brought into contact with the boss 95 or the wall 96, whereby the pickup can be protected from impact.

## Claims

1. A disk recording or playback device comprising a pickup (2) provided on a chassis (1) and movable toward or away from a center of a disk (7), a guide rod (4) extending in the direction of movement of the pickup (2) and having the pickup fitted therearound, and an adjusting mechanism (5) for altering the tilt angle of the guide rod (4) within a plane containing the direction of movement of the pickup (2) and orthogonal to an upper surface of the chassis (1), the adjusting mechanism (5) comprising a bracket (9) for holding an end of the guide rod (4), a compression spring (50) for biasing the guide rod (4) and an adjusting screw (6) for depressing the guide rod (4) against the compression spring (50),
***characterized in that*** an accommodating portion (94) of the bracket (9) is being provided with a boss (95) positioned inside the compression spring (50) and having a height lower than a tilt adjusting range, the pickup (2) being positioned at a level not in contact with the chassis (1) when the guide rod (4) is placed on the boss (95),
wherein a tongue (91) which fits in an aperture (10) of the chassis (1) is extending from the bracket (9),
the tongue (91) being in contact with an edge (11) of the aperture (10), whereby the bracket (9) being positioned in place with respect to horizontal directions in the plane of the chassis (1).

2. A disk recording or playback device comprising a pickup (2) provided on a chassis (1) and movable toward or away from a center of a disk (7), a guide rod (4) extending in the direction of movement of the pickup (2) and having the pickup (2) fitted therearound, and an adjusting mechanism (5) for altering the tilt angle of the guide rod (4) within a plane containing the direction of movement of the pickup (2) and orthogonal to an upper surface of the chassis (1), the adjusting mechanism (5) comprising a bracket (9) for holding an end of the guide rod (4), a compression spring (50) for biasing the guide rod (4) and an adjusting screw (6) for depressing the guide rod (4) against the compression spring (50),
a guide portion (93) of the bracket (9) being provided with a wall (96) having a height lower than a tilt adjusting range, the pickup (2) being positioned at a level not in contact with the chassis (1) when the guide rod (4) is placed on the wall (96),
***characterized in that*** a tongue (91) which fits in an aperture (10) of the chassis (1) is extending from the bracket (9),
the tongue (91) being in contact with an edge (11) of the aperture (10), whereby the bracket (9) is being positioned in place with respect to horizontal directions in the plane of the chassis (1).

3. The disk recording or playback device according to claim 1 or 2 which is ***characterized in that*** the adjusting mechanism (5) comprises first positioning means (3) for positioning the bracket (9) in place on the chassis (1), and second positioning means (8) for positioning the adjusting screw (6) in a plane substantially parallel to the surface of the chassis (1) and accurately pointing the direction of advance of the adjusting screw (6) toward a center C of the guide rod (4).

## Patentansprüche

1. Plattenaufzeichnungs- oder Wiedergabevorrichtung mit einem Aufnehmer (2), der auf einem Chassis (1) angeordnet und der zu der oder von der Mitte einer Platte (7) bewegbar ist, einem Führungsstab (4), der sich in der Richtung der Bewegung des Aufnehmers (2) erstreckt und um den der Aufnehmer angepasst ist, und einer Einstellvorrichtung (5), um den Neigungswinkel des Fühmngsstabs (4) innerhalb einer Ebene zu verändern, die die Richtung der Bewegung des Aufnehmers (2) enthält und die orthogonal zu einer oberen Oberfläche des Chassis (1) ist, wobei die Einstellvorrichtung (5) eine Klammer (9) aufweist, um ein Ende des Führungsstabs (4) zu halten, eine Druckfeder (50), um den Führungsstab (4) vorspannen, und eine Einstellschraube (6), um den Führungsstab (4) gegen die Druckfeder (50) zu drücken, **dadurch gekennzeichnet, dass**
ein Aufnahmebereich (94) der Klammer (9) einen Vorsprung (95) aufweist, der innerhalb der Druckfeder (50) angeordnet ist und eine Höhe aufweist, die geringer als ein Neigungsanpassungsbereich ist, wobei der Aufnehmer (2) auf einer Ebene angeordnet ist, die sich nicht in Kontakt mit dem Chassis (1) befindet, wenn der Führungsstab (4) auf dem Vorsprung (95) angeordnet ist,
wobei eine Zunge (91), die in eine Öffnung (10) des Chassis (1) einpasst, sich von der Klammer (9) erstreckt,
wobei die Zunge (91) in Kontakt mit einer Kante (11) der Öffnung (10) ist, wobei die Klammer (9) an einer Stelle in bezug auf die horizontalen Richtungen in der Ebene des Chassis (1) angeordnet ist.

2. Plattenaufzeichnungs- oder Wiedergabevorrichtung mit einem Aufnehmer (2), der auf einem Chassis (1) angeordnet und der zu der oder von der Mitte einer Platte (7) bewegbar ist, einem Führungsstab (4), der sich in der Richtung der Bewegung des Aufnehmers (2) erstreckt und um den der Aufnehmer angepasst ist, und einer Einstellvorrichtung (5), um den Neigungswinkel des Führungsstabs (4) innerhalb einer Ebene zu verändern, die die Richtung der Bewegung des Aufnehmers (2) enthält und die orthogonal zu einer oberen Oberfläche des Chassis (1) ist, wobei die Einstellvorrichtung (5) eine Klammer (9) aufweist, um ein Ende des Führungsstabs (4) zu halten, eine Druckfeder (50), um den Führungsstab (4) vorspannen, und eine Einstellschraube (6), um den Führungsstab (4) gegen die Druckfeder (50) zu drücken,
wobei ein Führungsbereich (93) der Klammer (9) eine Wand (96) mit einer Höhe aufweist, die geringer als ein Neigungsanpassungsbereich ist, wobei der Aufnehmer (2) auf einer Ebene angeordnet ist, die sich nicht in Kontakt mit dem Chassis (1) befindet, wenn der Führungsstab (4) auf der Wand (96) angeordnet ist,
**dadurch gekennzeichnet, dass** eine Zunge (91), die in eine Öffnung (10) des Chassis (1) einpasst, sich von der Klammer (9) erstreckt,
wobei die Zunge (91) in Kontakt mit einer Kante (11) der Öffnung (10) ist, wobei die Klammer (9) an einer Stelle in bezug auf die horizontalen Richtungen in der Ebene des Chassis (1) angeordnet ist.

3. Plattenaufzeichnungs- oder Wiedergabevorrichtung nach Anspruch 1 oder 2, **dadurch gekennzeichnet, dass** die Einstellvorrichtung (5) erste Positioniermittel (3), um die Klammer (9) auf eine Stellung auf dem Chassis (1) zu positionieren, und zweite Positioniermittel (8) aufweist, um die Einstellschraube (6) in einer Ebene zu positionieren, die im Wesentlichen parallel zu der Oberfläche des Chassis (1) ist, und um die Vortriebsrichtung der Einstellschraube (6) gegen die Mitte (C) des Führungsstabs (4) zu richten.

## Revendications

1. Dispositif d'enregistrement ou de lecture de disque comprenant un phonocapteur (2) disposé sur un châssis (1) et pouvant s'approcher ou s'éloigner du centre d'un disque (7), une tige-guide (4) s'étendant dans le sens du mouvement du phonocapteur (2) et ayant le phonocapteur fixé sur sa circonférence, et un mécanisme de réglage (5) pour modifier l'angle d'inclinaison de la tige-guide (4) dans un plan contenant la direction du mouvement du phonocapteur (2) et perpendiculaire à une surface supérieure du châssis (1), le mécanisme de réglage (5) comprenant un support (9) pour tenir une extrémité de la tige-guide (4), un ressort de compression (50) pour dévier la tige-guide (4) et une vis de réglage (6) pour appuyer la tige-guide (4) contre le ressort de compression (50),
**caractérisé en ce qu'**une partie de logement (94) du support (9) est pourvue d'un bossage (95) placé à l'intérieur du ressort de compression (50) et ayant une hauteur inférieure à la plage de réglage de l'inclinaison, le phonocapteur (2) étant placé à un niveau où il n'est pas en contact avec le châssis (1) quand la tige-guide (4) est placée contre le bossage (95),
dans lequel une languette (91) qui s'étend à partir du support (9) rentre dans une ouverture (10) du châssis (1),
la languette (91) étant en contact avec un bord (11) de l'ouverture (10), moyennant quoi le support (9) est maintenu en place par rapport aux directions horizontales dans le plan du châssis (1).

2. Dispositif d'enregistrement ou de lecture de disque comprenant un phonocapteur (2) disposé sur un châssis (1) et pouvant s'approcher ou s'éloigner du centre d'un disque (7), une tige-guide (4) s'étendant dans le sens du mouvement du phonocapteur (2) et ayant le phonocapteur fixé sur sa circonférence, et un mécanisme de réglage (5) pour modifier l'angle d'inclinaison de la tige-guide (4) dans un plan contenant la direction du mouvement du phonocapteur (2) et perpendiculaire à la surface supérieure du châssis (1), le mécanisme de réglage (5) comprenant un support (9) pour tenir une extrémité de la tige-guide (4), un ressort de compression (50) pour dévier la tige-guide (4) et une vis de réglage (6) pour appuyer la tige-guide (4) contre le ressort de compression (50),
une partie guide (93) du support (9) étant pourvue d'une paroi (96) ayant une hauteur inférieure à la plage de réglage de l'inclinaison, le phonocapteur (2) étant placé à un niveau où il n'est pas en contact avec le châssis (1) quand la tige-guide (4) repose sur la paroi (96),
**caractérisé en ce qu'**une languette (91) qui s'étend à partir du support (9) rentre dans une ouverture (10) du châssis (1),
la languette (91) étant en contact avec un bord (11) de l'ouverture (10), moyennant quoi le support (9) est maintenue en place par rapport aux directions horizontales dans le plan du châssis (1).

3. Dispositif d'enregistrement ou de lecture de disque selon la revendication (1) ou (2), **caractérisé en ce que** le mécanisme de réglage (5) comprend un premier moyen de positionnement (3) pour mettre le support (9) sur le châssis (1) et un second moyen de positionnement (8) pour placer la vis de réglage (6) dans un plan sensiblement parallèle à la surface du châssis (1) et orienter avec précision la direction de progression de la vis de réglage (6) vers le centre (C) de la tige-guide (4).
